# DEMANDE DE BREVET EUROPEEN

(11) **EP 3 974 392 A1**
(43) Date de publication de la demande: **30.03.2022**
(21) Numéro de dépôt: 21199493.4
(22) Date de dépôt: 28.09.2021
(51) Int. Cl.: C01G 53/00, H01M 4/525

(54) **PROCÉDÉ DE PRÉPARATION D'UN MATÉRIAU ACTIF D'ÉLECTRODE POSITIVE DU TYPE OXYDE MÉTALLIQUE LITHIÉ COMPRENANT DU TITANE**

(30) Priorité: 29.09.2020 FR 2009897
(71) Demandeur: Commissariat à l'énergie atomique et aux énergies alternatives, 75015 Paris (FR); Centre National de la Recherche Scientifique, 75794 Paris Cedex 16 (FR)
(72) Inventeur: PERALTA,, David, 38000 GRENOBLE (FR); BOURBON,, Carole, 38000 GRENOBLE (FR); COLIN,, Jean-François, 38000 GRENOBLE (FR); HERLIN-BOIME,, Nathalie, 38000 GRENOBLE (FR); FONDARD, Jérémie, 38054 GRENOBLE CEDEX 09 (FR)
(74) Mandataire: Brevalex

(57) **Abrégé**

L'invention a trait à un procédé de préparation d'un matériau actif d'électrode positive pour batterie au lithium consistant en un oxyde lithié comprenant du titane et éventuellement un ou plusieurs autres éléments métalliques comprenant les étapes successives suivantes :
a) une étape de formation d'un précipité comprenant du titane et le ou les éventuels autres éléments métalliques par mise en contact d'un complexe de coordination du titane et, le cas échéant, d'au moins un sel du ou des autres éléments métalliques avec un milieu aqueux ;
b) une étape de récupération du précipité ainsi formé ;
c) une étape de calcination du précipité en présence d'une source de lithium.

## Description

### DOMAINE TECHNIQUE ET ÉTAT DE LA TECHNIQUE ANTÉRIEURE

La présente invention se rapporte à un procédé de préparation d'un matériau actif d'électrode positive pour batterie au lithium (et plus spécifiquement, une batterie lithium-ion) consistant en un oxyde métallique lithié comprenant du titane.

Les batteries lithium-ion sont particulièrement intéressantes pour les domaines où l'autonomie est un critère primordial, tels que cela est le cas du domaine des appareils nomades (tels que les téléphones portables, les ordinateurs portables) ou du domaine des transports tels que les véhicules électriques, les véhicules hybrides, ou encore des domaines médicaux, spatiaux ou de la microélectronique.

D'un point de vue fonctionnel, les batteries lithium-ion reposent sur le principe de l'intercalation-désintercalation du lithium au sein des matériaux constitutifs des électrodes des cellules électrochimiques de la batterie, lesquels matériaux peuvent être qualifiés de matériaux actifs.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrodes positive et négative.

Dans les batteries lithium-ion, l'élément le plus critique et le plus limitatif s'avère être l'électrode positive et, plus spécifiquement, le matériau actif de l'électrode positive, dont les lithiation/délithiation successives peuvent engendrer un vieillissement. Plus spécifiquement, des atomes de métaux de transition présents dans le matériau actif peuvent migrer d'un site cristallographique à l'autre et peuvent à terme ralentir et bloquer l'accès à certains sites du lithium, ce qui contribue à diminuer les performances du matériau, et par conséquent celles de la batterie, au cours des cycles.

Pour stabiliser ces matériaux, des dopants destinés à stabiliser la structure peuvent être introduits dans ceux-ci, tels que le titane, qui entre efficacement dans la constitution de matériaux actifs d'électrode positive couramment utilisés et, plus particulièrement :
- les oxydes lamellaires de formule Li(Ni, Co, Mn, Ti)O₂, dans lesquels le titane peut être présent à hauteur de quelques pourcents, le titane assurant ainsi un rôle de dopant ou dans lesquels le titane peut remplacer le manganèse et/ou le nickel et/ou le cobalt dans la formule ci-dessus ;
- les oxydes de type spinelle de formule Li(Ni, Co, Mn, Ti)O₄, dans lesquels le titane peut être présent à hauteur de quelques pourcents, le titane assurant ainsi un rôle de dopant ou dans lesquels le titane peut remplacer le manganèse et/ou le nickel et/ou le cobalt dans la formule ci-dessus.

Ces oxydes peuvent être préparés par différentes voies.

Par exemple, il peut être envisagé un procédé dit « tout solide », dans lequel des précurseurs comprenant les éléments métalliques destinés à entrer dans l'oxyde souhaité sont mis à réagir par voie solide, tels que :
- dans Electrochemistry Communications, Vol. 3, Issue 2, February 2001, p. 52-55*,* qui décrit la préparation d'oxydes lamellaires de formule LiNi₁₋ₓTiₓO₂ (0,025≤x≤0,2) par réaction en voie solide à 750°C sous courant d'oxygène des précurseurs LiOH, Ni(OH)₂ et TiO₂;
- dans Solid State Ionics, Vol. 86-88, Part 1, July 1996, p. 171-175*,* qui décrit la préparation d'oxydes lamellaires de formule LiNi_{1-y}Ti_{y}O₂ (0,1≤y≤0,5) par réaction par voie solide de Li₂CO₃, NiO et de TiO₂.

A titre alternatif, il peut être envisagé également un procédé impliquant une coprécipitation, tel que dans International Journal of Minerals, Metallurgy and Materials, Vol. 16, Issue 4, August 2009, p.452-457*,* qui décrit la préparation d'un oxyde de formule LiNi_{0,8}Al_{0,2-x}TiₓO₂ (x=0,0-0,20) par réaction de coprécipitation assistée par ultrasons des précurseurs Ni(NO₃)₂, Al(NO₃)₃, LiOH.H₂O et TiO₂.

Aussi, au vu de ce qui existe déjà, les auteurs de la présente invention se sont fixé pour objectif de proposer un procédé de préparation d'un matériau actif d'électrode positive consistant en un oxyde lithié comprenant du titane qui puisse se dérouler en voie liquide et soit de mise en œuvre simple et ne nécessite pas d'équipements complexes et coûteux.

### EXPOSÉ DE L'INVENTION

Cet objectif est atteint par un procédé de préparation d'un matériau actif d'électrode positive pour batterie au lithium consistant en un oxyde lithié comprenant du titane et éventuellement un ou plusieurs autres éléments métalliques comprenant les étapes successives suivantes :
a) une étape de formation d'un précipité comprenant du titane et le ou les éventuels autres éléments métalliques par mise en contact d'un complexe de coordination du titane et, le cas échéant, d'au moins un sel du ou des autres éléments métalliques avec un milieu aqueux, avantageusement, basique ;
b) une étape de récupération du précipité ainsi formé ;
c) une étape de calcination du précipité en présence d'une source de lithium.

Dans ce qui précède et ce qui suit, il s'entend, par complexe de coordination du titane, un composé comprenant du titane sous forme d'un cation (plus spécifiquement, du titane au degré d'oxydation +IV), le titane étant lié à des molécules *via* des liaisons de coordination, ces molécules pouvant être qualifiées de ligands. Plus spécifiquement, les électrons de valence servant à la formation des liaisons de coordination proviennent uniquement d'atomes appartenant aux ligands, par exemple, *via* leurs doublets libres et/ou leurs charges négatives.

Par sel, il s'entend, dans ce qui précède et ce qui suit, un composé comprenant un élément métallique sous forme cationique combiné avec un ou plusieurs anions pour former un produit neutre et sans charge, les liaisons établies entre l'élément métallique et le ou les anions étant des liaisons ioniques.

Par électrode positive, il s'entend, dans ce qui précède et ce qui suit, l'électrode qui fait office de cathode, quand la batterie débite du courant (c'est-à-dire lorsqu'elle est en processus de décharge) et qui fait office d'anode lorsque la batterie est en processus de charge.

Le ou les éventuels autres éléments métalliques (étant entendu, autres que le titane) du matériau conformément au procédé de l'invention peuvent être choisis parmi les éléments métalliques de transition (tels que le manganèse, le cobalt, le nickel, le fer, le cuivre et les mélanges de ceux-ci), les éléments métalliques de post-transition (tel que l'aluminium) et les mélanges de ceux-ci. Plus spécifiquement, le ou les éléments métalliques peuvent être choisis parmi le manganèse, le cobalt, le nickel et les mélanges de ceux-ci.

Spécifiquement, les oxydes lithiés comprenant du titane susceptibles d'être obtenus à l'issue du procédé de l'invention peuvent être :
- des oxydes lamellaires de formule LiTiMO₂, dans laquelle M peut désigner Co, Ni, Mn, Al, Cu, Fe et des mélanges de ceux-ci, tels que Li(Ni,Mn,Co,Ti)O₂ comme LiNi_{0,8}Mn_{0,08}Co_{0,1}Ti_{0,02}O₂, Li(Ni, Ti)O₂ comme LiNi_{0,9}Ti_{0,1}O₂, Li(Ni, Co, Ti)O₂ comme LiNi_{0,8}Co_{0,1}Ti_{0,1}O₂, LiNi_{0,9}Co_{0,05}Ti_{0,05}O₂ ;
- des oxydes de type spinelle de formule LiTiMO₄, dans laquelle M peut être Ni, Mn, Co, Cu, Al, Fe et des mélanges de ceux-ci, tels que Li (Ni, Mn, Ti)O₄ comme LiNi_{0,5}Mn_{1,3}Ti_{0,2}O₄, Li(Ni, Ti)O₄ comme LiNi_{0,5}Ti_{1,5}O₄.

En premier lieu, le procédé de l'invention comprend une étape de formation d'un précipité comprenant du titane et le ou les éventuels autres éléments métalliques par mise en contact d'un complexe de coordination du titane et, le cas échéant, d'au moins un sel du ou des autres éléments métalliques avec un milieu aqueux, avantageusement, basique. Il est précisé que par milieu aqueux basique, il s'entend classiquement un milieu dont le pH est strictement supérieur à 7 et, de préférence, supérieur ou égal à 7,5.

Le complexe de coordination du titane comprend, avantageusement, au moins un ligand comprenant au moins deux groupes établissant des liaisons de coordination avec le titane, les liaisons de coordination s'établissant, classiquement, entre des doublets libres et/ou charges négatives portées par ces groupes, ce ou ces ligands pouvant être qualifiés de ligands polydentés (du fait qu'ils comprennent plusieurs groupes établissant des liaisons de coordination avec le titane et plus spécifiquement, de ligands bidentés, lorsqu'ils comprennent uniquement deux de ces groupes).

Parmi les ligands avantageux, il peut être cité, plus spécifiquement, un ligand bidenté comprenant un groupe carboxylate et un groupe alcoolate (ou alcoxyde), lesquels groupes assurent la coordination avec le titane.

Ainsi, le complexe de coordination du titane peut comprendre au moins un ligand bidenté comprenant un groupe carboxylate et un groupe alcoolate

En outre, le complexe de coordination du titane peut comprendre au moins un ligand comprenant un seul groupe établissant une liaison de coordination avec le titane, par exemple, un groupe -OH.

Plus particulièrement, le complexe de coordination du titane est un complexe comprenant :
- au moins un ligand bidenté comprenant au moins deux groupes établissant des liaisons de coordination avec le titane et, plus spécifiquement comprenant deux groupes, tels qu'un groupe carboxylate et un groupe alcoolate ; et
- au moins un ligand comprenant un seul groupe établissant une liaison de coordination avec le titane, tel qu'un groupe -OH.

Encore plus particulièrement, le complexe de coordination du titane est un complexe comprenant deux ligands bidentés comprenant chacun deux groupes établissant des liaisons de coordination avec le titane et, plus spécifiquement comprenant deux groupes, tels qu'un groupe carboxylate et un groupe alcoolate et comprenant deux ligands comprenant chacun un seul groupe établissant une liaison de coordination avec le titane, tel qu'un groupe -OH.

Par ailleurs, le complexe de coordination peut comprendre un ou plusieurs cations pour neutraliser, le cas échéant, l'édifice constitué par le titane et ses ligands, ce ou ces cations pouvant être des cations ammonium.

Un complexe de coordination du titane efficace pour la mise en œuvre du procédé de l'invention est un complexe répondant à la formule (I) suivante :

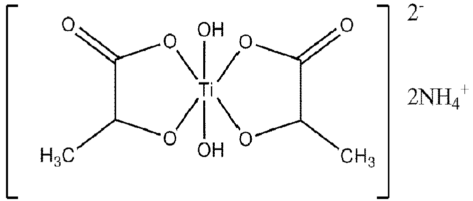

Ce type de complexe a pour particularité d'être facilement soluble en milieu aqueux.

Le cas échéant, le ou les sels du ou des autres éléments métalliques peuvent être des nitrates, des carbonates, des chlorures, ou des sulfates du ou des autres éléments métalliques et, plus spécifiquement, des sulfates.

Il est précisé, que lorsque la formation du précipité implique à la fois du titane et un ou plusieurs autres éléments métalliques, cette formation peut être qualifiée de coprécipitation.

La précipitation ou coprécipitation permet, après calcination du précipité avec la source de lithium, la production de matériaux possédant des particules primaires (cristallites) agglomérées en particules secondaires ayant une forme sphérique (environ 6-10 µm). Un des avantages d'une telle morphologie réside dans l'amélioration de ces particules à former un ensemble compact. Le volume d'une batterie étant un volume fixe, l'énergie embarquée par la batterie dépendra forcement de la quantité de matériaux actifs contenue dans la batterie. En augmentant la densité des poudres de matériau actif, il est donc possible de maximiser la quantité de matériau dans les cellules et ainsi d'augmenter l'énergie embarquée dans la batterie. Comme autre avantage notable, la synthèse par (co)précipitation permet un mélange idéal de tous les éléments chimiques d'un matériau, et notamment le titane, dans notre cas, car tous les éléments sont préalablement dissous et mélangés en voie liquide.

Lorsque la formation du précipité implique à la fois du titane et un ou plusieurs autres éléments métalliques, le procédé peut comprendre, avant l'étape de formation du précipité en tant que telle, une étape de préparation d'une solution comprenant le ou les sels du ou des autres éléments métalliques, par exemple, par dissolution du ou desdits sels dans de l'eau.

Dans ce cas, l'étape de formation du précipité s'effectue par mise en contact de la solution comprenant le ou les sels des éléments métalliques et le complexe de coordination du titane avec un milieu aqueux précipitant, de préférence, basique.

Quel que soit le mode de réalisation, le milieu aqueux peut être obtenu par addition d'au moins une solution basique, par exemple, une solution de soude, une solution d'ammoniaque ou un mélange de celles-ci.

Quel que soit le mode de réalisation, l'étape de formation du précipité peut être réalisée sous gaz inerte (par exemple, de l'azote ou de l'argon).

Cette étape de formation d'un précipité peut être mise en œuvre dans un réacteur de précipitation, dans lequel les opérations successives suivantes peuvent, en particulier, être mises en œuvre :
- une opération d'injection dans le réacteur d'une solution comprenant le complexe de coordination du titane et, le cas échéant, le ou les éventuels autres éléments métalliques ;
- une opération d'injection dans le réacteur d'au moins une solution basique, cette opération pouvant être continue pendant toute la durée de l'étape pour maintenir un pH basique ;
- une opération d'agitation du mélange résultant pendant une température et une durée appropriées et sous atmosphère inerte, jusqu'à formation complète du précipité.

Cette température et cette durée appropriées peuvent être déterminées, par des tests préalables permettant de fixer, pour une quantité donnée de complexe et, le cas échéant, de sel(s) et de pH, le couple de température et de durée nécessaire à la formation complète du précipité.

En variante, la solution comprenant le complexe de coordination du titane et la solution comprenant le ou les autres éléments métalliques peuvent être séparées avant l'introduction dans le réacteur et peuvent être injectés dans celui-ci *via* des circuits d'injection séparés.

Le précipité formé à l'issue de cette étape est un hydroxyde ou carbonate mixte comprenant du titane et, le cas échéant, le ou les autres éléments métalliques.

Une fois l'étape de formation du précipité achevée, le précipité est récupéré, par exemple, par filtration.

Le précipité ainsi récupéré peut ensuite être soumis à un lavage à l'eau, notamment pour supprimer les ions adsorbés à la surface du précipité et/ou séché, par exemple, sous vide.

Enfin, le précipité est soumis à une étape de calcination en présence d'une source de lithium, de sorte à former le matériau actif recherché. En particulier, la source de lithium peut être un sel de lithium, tel que du carbonate de lithium, de l'hydroxyde de lithium ou de l'acétate de lithium. La source de lithium est utilisée, avantageusement, en excès, par exemple, un excès allant jusqu'à 3% molaire par rapport à la quantité stœchiométrique.

Il s'entend que la température et la durée de calcination seront choisies par l'homme du métier de sorte à obtenir la phase oxyde sous la forme cristallisée souhaitée, cette température et durée pouvant être aisément déterminées par l'homme du métier par des essais préalables consistant à déterminer en fonction de la phase recherchée (celle-ci étant détectable par diffractométrie de rayons X) le couple de température et de durée appropriées.

A titre d'exemple, l'étape de calcination peut être réalisée à une température allant de 700°C à 1000°C, et de préférence de 800°C à 1000°C pendant une durée allant de 4 heures à 24 heures. De préférence, cette étape de calcination est effectuée à l'air libre ou sous atmosphère contrôlée d'oxygène.

L'invention va maintenant être décrite par rapport aux exemples suivants donnés à titre illustratif et non limitatif.

### BRÈVE DESCRIPTION DES DESSINS

La présente invention sera mieux comprise sur la base de la description qui va suivre et des dessins en annexe sur lesquels:
La figure 1 est un graphique illustrant, pour l'exemple 1, l'évolution de la capacité C (en mAg/h) en fonction du nombre de cycles N, la courbe a) correspondant à celle obtenue avec la pile bouton comprenant le matériau non dopé au titane et la courbe b) correspondant à celle obtenue avec la pile bouton comprenant le matériau dopé au titane ;
La figure 2 est un graphique illustrant, pour l'exemple 1, l'évolution la capacité C (en mAh/g) en fonction du nombre de cycles N, la courbe a) correspondant à l'essai à 4,3 V et la courbe b) correspondant à l'essai à 4,4 V ;
La figure 3 est un graphique illustrant, pour l'exemple 1, l'évolution de la capacité C (en mAh/g) en fonction du régime de charge/décharge appliqué (indiqué par Cᵣₐₜₑ en ordonnée) ;
La figure 4 est un graphique illustrant, pour l'exemple 2, l'évolution de la capacité C (en mAg/h) en fonction du nombre de cycles N, la courbe a) correspondant à celle obtenue pour le cyclage à C/10 et la courbe b) correspondant à celle obtenue pour le cyclage à 1C ;
La figure 5 est un graphique illustrant, pour l'exemple 2, l'évolution de la capacité C (en mAh/g) en fonction du régime de charge/décharge appliqué (indiqué par Cᵣₐₜₑ en ordonnée) ;
La figure 6 est un graphique illustrant, pour l'exemple 3, l'évolution de la capacité C (en mAg/h) en fonction du nombre de cycles N, la courbe a) correspondant à celle obtenue pour le cyclage à C/10 et la courbe b) correspondant à celle obtenue pour le cyclage à 1C ;
La figure 7 est un graphique illustrant, pour l'exemple 3, l'évolution de la capacité C (en mAh/g) en fonction du régime de charge/décharge appliqué (indiqué par Cᵣₐₜₑ en ordonnée).
La figure 8 illustre, pour l'exemple 4, un graphique représentant l'évolution de la capacité C (en mAh/g) en fonction du nombre de cycles N, la courbe a) correspondant à celle obtenue avec la pile bouton comprenant le matériau dopé au titane et la courbe b) correspondant à celle obtenue avec la pile bouton comprenant le matériau non dopé au titane.
La figure 9 est un graphique illustrant, pour l'exemple 4, l'évolution de la capacité C (en mAh/g) en fonction du régime de charge/décharge appliqué (indiqué par l'ordonnée Crate), la courbe a) correspondant au test 4,9V-3V du matériau dopé au titane et la courbe b) correspondant au test 4,9V-3V du matériau non dopé au titane.
La figure 10 est un graphique illustrant pour l'exemple 4, l'évolution de la tension U (en V) en fonction de la capacité C (en mAh/g).
La figure 11 est un graphique illustrant, pour l'exemple 5, l'évolution de la capacité C (en mAh/g) en fonction du nombre de cycles N, la courbe a) correspondant à celle obtenue avec la pile bouton comprenant le matériau dopé au titane et la courbe b) correspondant à celle obtenue avec la pile bouton comprenant le matériau non dopé au titane.
La figure 12 est un graphique illustrant, pour l'exemple 5, l'évolution de la capacité C (en mAh/g) en fonction du régime de charge/décharge appliqué (indiqué par l'ordonné Cᵣₐₜₑ), la courbe a) correspondant au test 4,9V-3V du matériau dopé au titane et la courbe b) correspondant au test 4,9V-3V du matériau non-dopé au titane.
La figure 13 est un graphique illustrant pour l'exemple 5, l'évolution de la tension U (en V) en fonction de la capacité C (en mAh/g).
La figure 14 illustre, pour l'exemple 6, un graphique représentant l'évolution de la capacité C (en mAh/g) en fonction du nombre de cycles N, la courbe a) correspondant à celle obtenue avec la pile bouton comprenant le matériau substitué par du titane et la courbe b) correspondant à celle obtenue avec la pile bouton comprenant le matériau sans présence de titane.
La figure 15 illustre, pour l'exemple 6, un graphique représentant l'évolution de la capacité C (en mAh/g) en fonction du régime de charge/décharge appliqué (indiqué par l'ordonné Cᵣₐₜₑ), la courbe a) correspondant au test 4,9V-3V du matériau substitué par du titane et la courbe b) correspondant au test 4,9V-3V du matériau sans présence de titane.
La figure 16 un graphique illustrant pour l'exemple 6, l'évolution de la tension U (en V) en fonction de la capacité C (en mAh/g).

### EXPOSÉ DÉTAILLÉ DE MODES DE RÉALISATION PARTICULIERS

### EXEMPLE 1

Le présent exemple a trait à la préparation d'un oxyde lamellaire de formule LiNi_{0,8}Mn_{0,08}Co_{0,1}Ti_{0,02}O₂.

Dans un premier temps, il est préparé une solution par dissolution de sulfate de nickel (169,9 g), de sulfate de manganèse (10,9 g), de sulfate de cobalt (22,7 g) dans de l'eau (392,3 g). A cette solution est ajoutée une solution de *bis*(lactalo)dihydroxyde titanate de diammonium (9,4 g à 50% massique) de formule suivante : 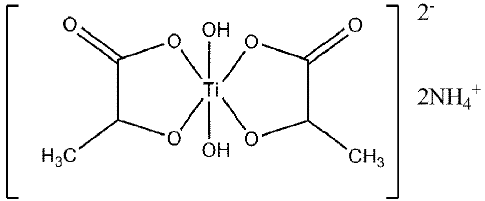 moyennant quoi la solution résultante est une solution équimolaire à 2 M (présentant un volume d'environ 400 mL). Une solution de soude 5 M est préparée séparément ainsi qu'une solution diluée d'ammoniaque (150,2 g d'ammoniaque à 28% massique diluée avec 233,1 g d'eau).

Les trois solutions ont des circuits d'injection séparés permettant de pomper les solutions dans un réacteur de coprécipitation de 5L, dans lequel 1L d'eau et 150 g d'ammoniaque à 28% ont été introduits au préalable. La température est portée à 50°C et le contenu du réacteur est maintenu sous une agitation de 1000 tours/minute. Un circuit annexe de gaz inerte (argon ou azote) permet de désoxygéner la solution tout en maintenant le réacteur sous atmosphère inerte. La solution contenant les éléments métalliques est pompée dans le réacteur à hauteur de 360 mL.

Durant toute l'opération, la solution d'ammoniaque et de soude sont injectées en parallèle afin de maintenir un pH constant à 11. Une fois la solution métallique introduite, la solution est maintenue sous agitation pendant 3 heures. La solution est ensuite filtrée et le précipité lavé à l'eau chaude afin d'éliminer les ions sulfates et sodium potentiellement adsorbés à la surface du matériau. Le précipité d'hydroxyde mixte de formule Ni_{0.8}Mn_{0.08}Co_{0.1}Ti_{0.02}(OH)₂ est ensuite séché sous vide à 80°C pendant une nuit.

Dans un second temps, l'hydroxyde de formule Ni_{0.8}Mn_{0.08}Co_{0.1}Ti_{0.02}(OH)₂ est ensuite mélangé à du carbonate de lithium (3% d'excès molaire par rapport à la stoechiométrie) puis est calciné sous oxygène à 850°C pendant 12 heures pour former le composé LiNi_{0.8}Mn_{0.08}Co_{0.1}Ti_{0.02}O₂.

Le matériau est ensuite caractérisé par diffraction des rayons X. Le diffractogramme obtenu est caractéristique d'un oxyde lamellaire présentant le groupe d'espace R -3 m.

Des analyses élémentaires par ICP et XRF ont été effectuées sur le matériau, les caractérisations permettant d'accéder aux formules chimiques suivantes du matériau synthétisé :
- LiNi_{0,79}Mn_{0,08}Co_{0,10}Ti_{0,02}O₂ dans le cas de l'ICP ;
- LiNi_{0,8}Mn_{0,07}Co_{0,10}Ti_{0,02}O₂ dans le cas de l'XRF.

Le matériau a ensuite été caractérisé en électrochimie en pile bouton. Pour ce faire, la poudre synthétisée est mélangée à une source de carbone (SuperP^{®}), du PVDF 5130 dans de la N-méthyl-2-pyrrolidone (NMP). La composition du mélange en masse représente le ratio suivant 80/10/10 (matériau/PVDF/Carbone). Le mélange ainsi formé est enduit sur une feuille d'aluminium puis laissé sécher pendant 24 heures à 60°C pour évaporer la NMP. A partir de cette feuille ainsi enduite, un disque de 14mm est alors découpé puis séché sous vide pendant 48 heures à 80°C. L'électrode ainsi formée est ensuite rentrée en boite à gant et une pile bouton est alors assemblée en utilisant du lithium métal comme anode, du Celgard 2400 ^{®} comme séparateur et un électrolyte (LiPF₆ 1M dans un mélange de solvants carbonates EC/PC/DMC, EC correspondant au carbonate d'éthylène, PC au carbonate de propylène et DMC correspondant au carbonate de diméthyle).

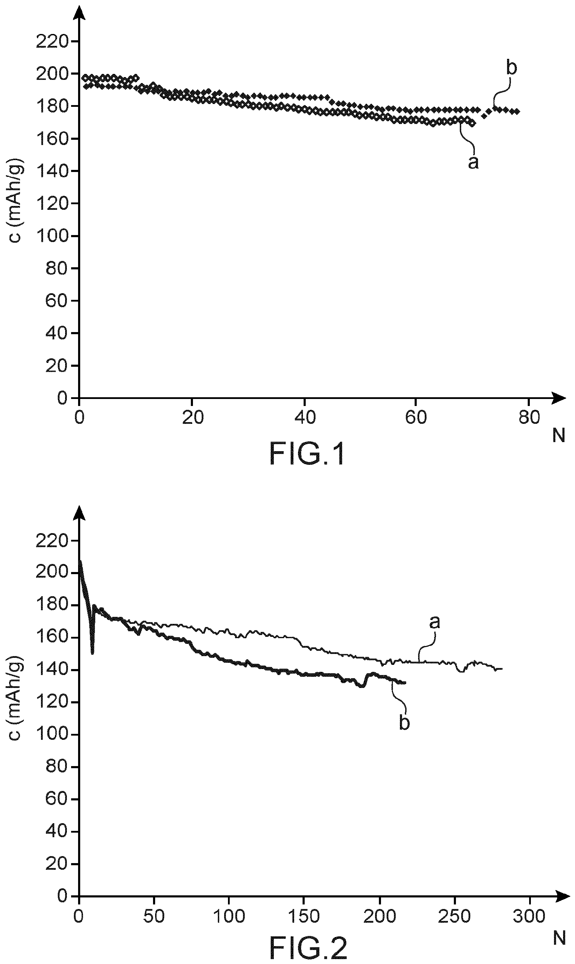

En parallèle, une pile bouton a été réalisée de la même manière que ci-dessus, si ce n'est que le matériau actif d'électrode positive n'est pas dopé au titane, ce matériau ayant pour formule LiNi_{0,8}Mn_{0,1}Co_{0,1}O₂. Une comparaison des performances entre la pile bouton comprenant le matériau dopé au titane et la pile bouton comprenant le matériau non dopé au titane cyclés à C/10 entre 4,3 V et 2,7 V est présenté à la figure 1 jointe en annexe, qui est un graphique illustrant l'évolution de la capacité C (en mAg/h) en fonction du nombre de cycles N, la courbe a) correspondant à celle obtenue avec la pile bouton comprenant le matériau non dopé au titane et la courbe b) correspondant à celle obtenue avec la pile bouton comprenant le matériau dopé au titane.

Il apparait que le matériau possédant 2% de titane est plus stable que le matériau non dopé.

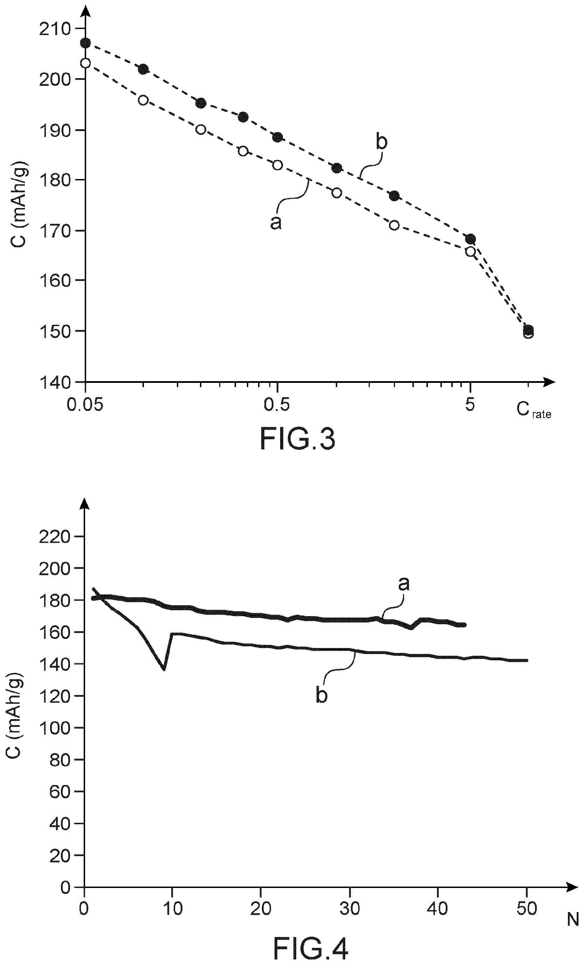

Le matériau dopé au titane est ensuite évalué en termes de puissance toujours dans la même pile bouton, les résultats des performances obtenues à 4,3 V et à 4,4 V à 1C étant illustrés sur la figure 2 jointe en annexe, qui illustre l'évolution la capacité C (en mAh/g) en fonction du nombre de cycles N, la courbe a) correspondant à l'essai à 4,3 V et la courbe b) correspondant à l'essai à 4,4 V. Il a été également déterminé une signature en puissance qui montre les performances du matériau en fonction du régime de charge/décharge appliqué, les résultats étant représentés sur la figure 3 jointe en annexe, qui illustre l'évolution de la capacité C (en mAh/g) en fonction du régime de charge/décharge appliqué (indiqué par l'ordonné Cᵣₐₜₑ), la courbe a) correspondant au test 4,3V-2,7V et la courbe b) correspondant au test 4,4V-2,7 V.

Les performances atteintes par le matériau sont excellentes.

### EXEMPLE 2

Le présent exemple a trait à la préparation d'un oxyde lamellaire de formule LiNi_{0,9}Co_{0,05}Ti_{0,05}O₂.

Dans un premier temps, il est préparé une solution par dissolution de sulfate de nickel (191,2 g), de sulfate de cobalt (11,4 g) dans de l'eau (380,7 g). A cette solution est ajoutée une solution de *bis*(lactalo)dihydroxyde titanate de diammonium (23,5 g à 50% massique) de formule suivante : 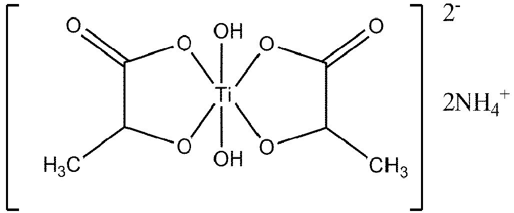 moyennant quoi la solution résultante est une solution équimolaire à 2 M (présentant un volume d'environ 400 mL). Une solution de soude à 5M est préparée séparément ainsi qu'une solution d'ammoniaque diluée (150,2 g d'ammoniaque à 28% massique dilué avec 233,1 g d'eau).

Les trois solutions ont des circuits d'injection séparés permettant de pomper les solutions dans un réacteur de coprécipitation de 5L, dans lequel 1L d'eau et 150 g d'ammoniaque à 28% ont été introduits au préalable. La température est portée à 50°C et le contenu du réacteur est maintenu sous une agitation de 1000 tours/minute. Un circuit annexe de gaz inerte (argon ou azote) permet de désoxygéner la solution tout en maintenant le réacteur sous atmosphère inerte. La solution contenant les éléments métalliques est pompée dans le réacteur à hauteur de 360 mL.

Durant toute l'opération, la solution d'ammoniaque et de soude sont injectées en parallèle afin de maintenir un pH constant à 11. Une fois la solution métallique introduite, la solution est maintenue sous agitation pendant 3 heures. La solution est ensuite filtrée et le précipité lavé à l'eau chaude afin d'éliminer les ions sulfates et sodium potentiellement adsorbés à la surface du matériau. Le précipité d'hydroxyde mixte de formule Ni_{0.9}Co_{0.05}Ti_{0.05}(OH)₂ est ensuite séché sous vide à 80°C pendant une nuit.

Dans un second temps, l'hydroxyde de formule Ni_{0.9}Co_{0.05}Ti_{0.05}(OH)₂ est ensuite mélangé à du carbonate de lithium (3% d'excès molaire par rapport à la stoechiométrie) puis est calciné à 850°C pendant 12 heures sous oxygène pour former le composé LiNi_{0,9}Co_{0,05}Ti_{0,05}O₂.

Le matériau est ensuite caractérisé par diffraction des rayons X. Le diffractogramme obtenu est caractéristique d'un oxyde lamellaire présentant le groupe d'espace R -3 m.

Des analyses élémentaires par ICP et XRF ont été effectuées sur le matériau, les caractérisations permettant d'accéder aux formules chimiques suivantes du matériau synthétisé :
- LiNi_{0,88}Co_{0,06}Ti_{0,06}O₂ dans le cas de l'ICP ; et
- LiNi_{0,88}Co_{0,06}Ti_{0,06}O₂ dans le cas de l'XRF.

Le matériau a ensuite été caractérisé en électrochimie en pile bouton. Pour ce faire, la poudre synthétisée est mélangée à une source de carbone (SuperP^{®}), du PVDF 5130 dans de la N-méthyl-2-pyrrolidone (NMP). La composition du mélange en masse représente le ratio suivant 80/10/10 (matériau/PVDF/Carbone). Le mélange ainsi formé est enduit sur une feuille d'aluminium puis laissé sécher pendant 24 heures à 60°C pour évaporer la NMP. A partir de cette feuille ainsi enduite, un disque de 14mm est alors découpé puis séché sous vide pendant 48 heures à 80°C. L'électrode ainsi formée est ensuite rentrée en boite à gant et une pile bouton est alors assemblée en utilisant du lithium métal comme anode, du Celgard 2400 ^{®} comme séparateur et un électrolyte (LiPF₆ 1M dans un mélange de solvants carbonates EC/PC/DMC, EC correspondant au carbonate d'éthylène, PC au carbonate de propylène et DMC correspondant au carbonate de diméthyle).

Les performances de la pile bouton comprenant le matériau dopé au titane sont mesurées par cyclage à C/10 et à 1C, les résultats étant représentés sur la figure 4, qui est un graphique illustrant l'évolution de la capacité C (en mAg/h) en fonction du nombre de cycles N, la courbe a) correspondant à celle obtenue pour le cyclage à C/10 et la courbe b) correspondant à celle obtenue pour le cyclage à 1C.

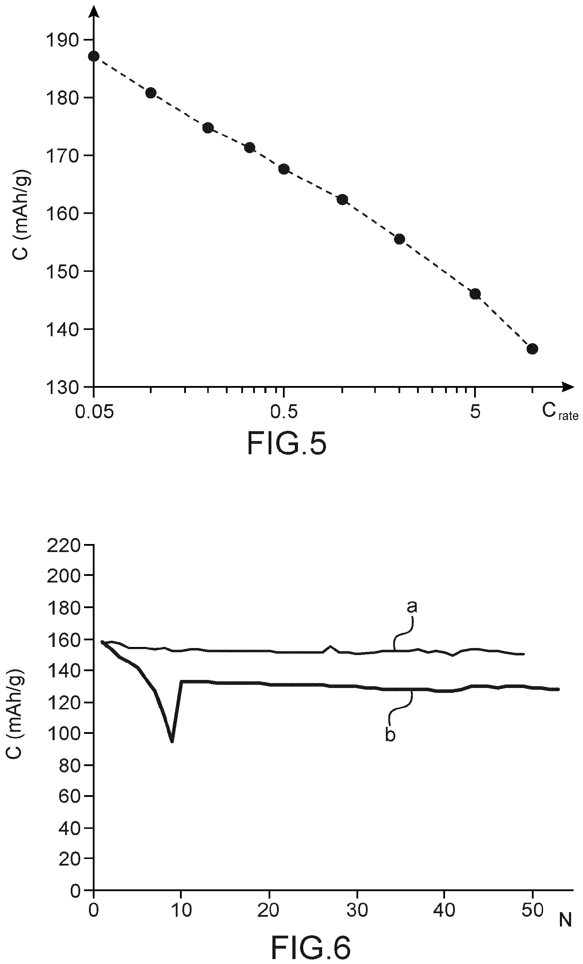

Il a été également déterminé une signature en puissance qui montre les performances du matériau en fonction du régime de charge/décharge appliqué, les résultats étant représentés sur la figure 5 jointe en annexe, qui illustre l'évolution de la capacité C (en mAh/g) en fonction du régime de charge/décharge appliqué (indiqué par l'ordonné Cᵣₐₜₑ).

Il ressort de ces résultats des performances engageantes.

### EXEMPLE 3

Le présent exemple a trait à la préparation d'un oxyde lamellaire de formule LiNi_{0,8}Co_{0,1}Ti_{0,1}O₂.

Dans un premier temps, il est préparé une solution par dissolution de sulfate de nickel (169,9 g), de sulfate de cobalt (22,7 g) dans de l'eau (361,5 g). A cette solution est ajoutée une solution de *bis*(lactalo)dihydroxyde titanate de diammonium (47,1 g à 50% massique) de formule suivante : 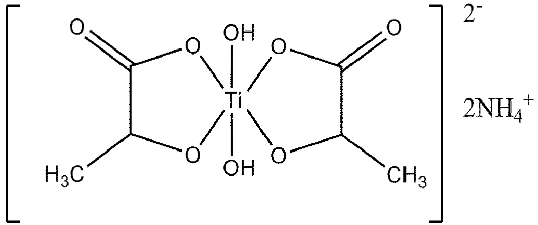 moyennant quoi la solution résultante est une solution équimolaire à 2 M (présentant un volume d'environ 400 mL). Une solution de soude à 5M est préparée séparément ainsi qu'une solution d'ammoniaque diluée (150,2 g d'ammoniaque à 28% massique dilué avec 233,1 g d'eau).

Les trois solutions ont des circuits d'injection séparés permettant de pomper les solutions dans un réacteur de coprécipitation de 5L, dans lequel 1L d'eau et 150 g d'une solution d'ammoniaque à 28% ont été introduits au préalable. La température est portée à 50°C et le contenu du réacteur est maintenu sous une agitation de 1000 tours/minute. Un circuit annexe de gaz inerte (argon ou azote) permet de désoxygéner la solution tout en maintenant le réacteur sous atmosphère inerte. La solution contenant les éléments métalliques est pompée dans le réacteur à hauteur de 360 mL.

Durant toute l'opération, la solution d'ammoniaque et de soude sont injectées en parallèle afin de maintenir un pH constant à 11. Une fois la solution métallique introduite, la solution est maintenue sous agitation pendant 3 heures. La solution est ensuite filtrée et le précipité lavé à l'eau chaude afin d'éliminer les ions sulfates et sodium potentiellement adsorbés à la surface du matériau. Le précipité d'hydroxyde mixte de formule Ni_{0.8}Co_{0.1}Ti_{0.1}(OH)₂ est ensuite séché sous vide à 80°C pendant une nuit.

Dans un second temps, l'hydroxyde de formule Ni_{0.8}Co_{0.1}Ti_{0.1}(OH)₂ est ensuite mélangé à du carbonate de lithium (3% d'excès molaire par rapport à la stoechiométrie) puis est calciné sous oxygène à 850°C pendant 12 heures pour former le composé LiNi_{0,8}Co_{0,1}Ti_{0,1}O₂.

Le matériau est ensuite caractérisé par diffraction des rayons X. Le diffractogramme obtenu est caractéristique d'un oxyde lamellaire présentant le groupe d'espace R -3 m.

Des analyses élémentaires par ICP et XRF ont été effectuées sur le matériau, les caractérisations permettant d'accéder aux formules chimiques suivantes du matériau synthétisé :
- LiNi_{0,73}Co_{0,14}Ti_{0,13}O₂ dans le cas de l'ICP ; et
- LiNi_{0,73}Co_{0,14}Ti_{0,013}O₂ dans le cas de l'XRF.

Le matériau a ensuite été caractérisé en électrochimie en pile bouton. Pour ce faire, la poudre synthétisée est mélangée à une source de carbone (SuperP^{®}), du PVDF 5130 dans de la N-méthyl-2-pyrrolidone (NMP). La composition du mélange en masse représente le ratio suivant 80/10/10 (matériau/PVDF/Carbone). Le mélange ainsi formé est enduit sur une feuille d'aluminium puis laissé sécher pendant 24 heures à 60°C pour évaporer la NMP. A partir de cette feuille ainsi enduite, un disque de 14mm est alors découpé puis séché sous vide pendant 48 heures à 80°C. L'électrode ainsi formée est ensuite rentrée en boite à gant et une pile bouton est alors assemblée en utilisant du lithium métal comme anode, du Celgard 2400 ^{®} comme séparateur et un électrolyte (LiPF₆ 1M dans un mélange de solvants carbonates EC/PC/DMC, EC correspondant au carbonate d'éthylène, PC au carbonate de propylène et DMC correspondant au carbonate de diméthyle).

Les performances de la pile bouton comprenant le matériau dopé au titane sont mesurées par cyclage à C/10 et à 1C, les résultats étant représentés sur la figure 6, qui est un graphique illustrant l'évolution de la capacité C (en mAg/h) en fonction du nombre de cycles N, la courbe a) correspondant à celle obtenue pour le cyclage à C/10 et la courbe b) correspondant à celle obtenue pour le cyclage à 1C.

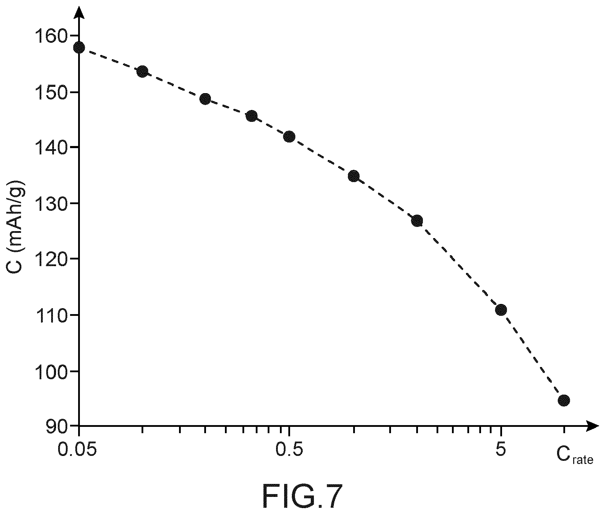

Il a été également déterminé une signature en puissance qui montre les performances du matériau en fonction du régime de charge/décharge appliqué, les résultats étant représentés sur la figure 7 jointe en annexe, qui illustre l'évolution de la capacité C (en mAh/g) en fonction de différents régimes de charge/décharge (indiqué par l'ordonnée Cᵣₐₜₑ).

Il ressort de ces résultats des performances engageantes.

### EXEMPLE 4

Le présent exemple a trait à la préparation d'un oxyde lithié de structure spinelle répondant à la formule LiNi_{0,5}Mn_{1,48}Ti_{0,02}O₄.

Dans un premier temps, il est préparé une solution par dissolution de sulfate de nickel (53,1 g), de sulfate de manganèse (101,1 g) dans de l'eau (396,1 g). A cette solution est ajoutée une solution de bis(lactalo)dihydroxyde titanate de diammonium (4,7 g à 50% massique) de formule suivante : 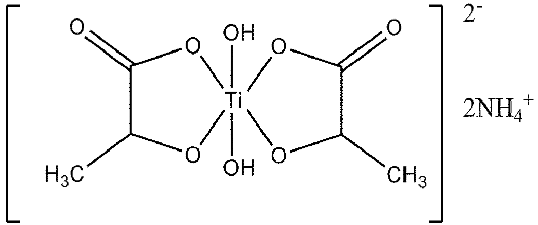 moyennant quoi la solution résultante est une solution équimolaire à 2 M (présentant un volume d'environ 400 mL). Une solution composée de 134,2 g de carbonate de sodium et d'ammoniaque (31,5 g d'ammoniaque à 28% massique) diluée dans de l'eau (565 g) est préparée séparément.

Les deux solutions ont des circuits d'injection séparés permettant de pomper les solutions dans un réacteur de coprécipitation de 5L, dans lequel 1L d'eau a été introduit au préalable. La température est portée à 50°C et le contenu du réacteur est maintenu sous une agitation de 1000 tours/minute. Un circuit annexe de gaz inerte (argon ou azote) permet de désoxygéner la solution tout en maintenant le réacteur sous atmosphère inerte. La solution contenant les éléments métalliques est pompée dans le réacteur à hauteur de 360 mL.

Durant toute l'opération, la solution composée de carbonate de sodium et d'ammoniaque est injectée en parallèle afin de maintenir un pH constant à 7,5. Une fois la solution métallique introduite, la solution est maintenue sous agitation pendant 1 nuit. La solution est ensuite filtrée et le précipité lavé à l'eau chaude afin d'éliminer les ions sulfates et sodium potentiellement adsorbés à la surface du matériau. Le précipité de carbonate de formule Ni_{0,25}Mn_{0,74}Ti_{0,01}CO₃ est ensuite séché sous vide à 80°C pendant une nuit.

Dans un second temps, le carbonate de formule Ni_{0,25}Mn_{0,74}Ti_{0,01}CO₃ est ensuite mélangé à du carbonate de lithium (3% d'excès molaire par rapport à la stoechiométrie) puis est calciné sous air à 950°C pendant 6 heures pour former le composé LiNi_{0,5}Mn_{1,48}Ti_{0,02}O₄.

Le matériau est ensuite caractérisé par diffraction des rayons X. Le diffractogramme obtenu est caractéristique d'un matériau de type spinelle présentant le groupe d'espace Fd-3m.

Le matériau a ensuite été caractérisé en électrochimie en pile bouton. Pour ce faire, la poudre synthétisée est mélangée à une source de carbone (SuperP^{®}), du PVDF 8130 dans de la N-méthyl-2-pyrrolidone (NMP). La composition du mélange en masse représente le ratio suivant 90/5/5 (matériau/PVDF/Carbone). Le mélange ainsi formé est enduit sur une feuille d'aluminium puis laissé sécher pendant 24 heures à 60°C pour évaporer la NMP. A partir de cette feuille ainsi enduite, un disque de 14mm est alors découpé puis séché sous vide pendant 48 heures à 80°C. L'électrode ainsi formée est ensuite rentrée en boite à gant et une pile bouton est alors assemblée en utilisant du lithium métal comme anode, du Celgard 2400 ^{®} comme séparateur et un électrolyte (LiPF6 1M dans un mélange de solvants carbonates EC/PC/DMC, EC correspondant au carbonate d'éthylène, PC au carbonate de propylène et DMC correspondant au carbonate de diméthyle).

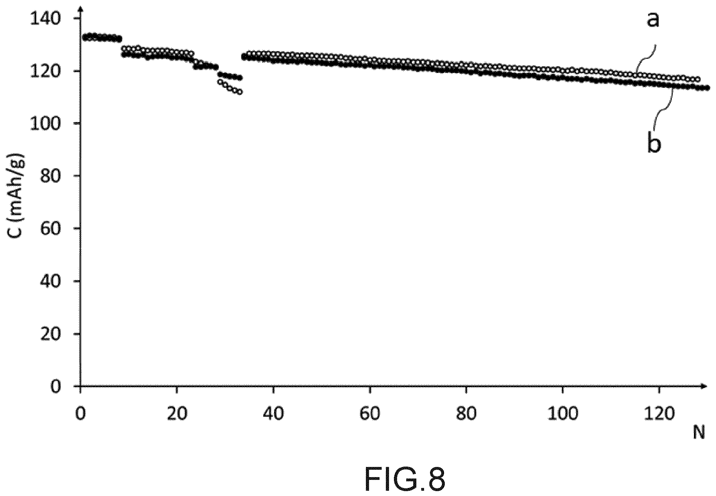

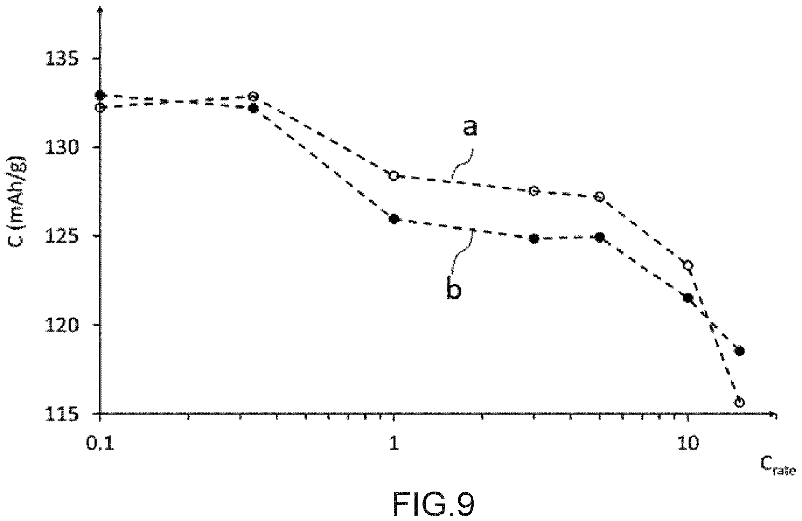

En parallèle, une pile bouton a été réalisée de la même manière que ci-dessus, si ce n'est que le matériau actif d'électrode positive n'est pas dopé au titane, ce matériau ayant pour formule LiNi_{0,5}Mn_{1,5}O₄. Une comparaison des performances entre la pile bouton comprenant le matériau dopé au titane et la pile bouton comprenant le matériau non dopé au titane est présenté à la figure 8 jointe en annexe, qui est un graphique illustrant l'évolution de la capacité C (en mAh/g) en fonction du nombre de cycles N, la courbe a) correspondant à celle obtenue avec la pile bouton comprenant le matériau dopé au titane et la courbe b) correspondant à celle obtenue avec la pile bouton comprenant le matériau non dopé au titane. Une signature en puissance du matériau est premièrement réalisée de C/10 à 15C sur les 35 premiers cycles (3 cycles à C/10, 5 cycles à C/3, 5 cycles à C, 5 cycles à 3C, 5 cycles à 5C, 5 cycles à 10C, 5 cycles à 15C entre 4,9 V et 3 V suivi d'un cyclage à 1C sur une centaine de cycles. Il apparait que le matériau possédant 1,3% de titane est plus stable que le matériau non dopé. Cette signature en puissance montre les performances du matériau en fonction du régime de charge/décharge appliqué. Le comportement en puissance est plus clairement représenté sur la figure 9 jointe en annexe, qui illustre l'évolution de la capacité C (en mAh/g) en fonction du régime de charge/décharge appliqué (indiqué par l'ordonnée Cᵣₐₜₑ), la courbe a) correspondant au test 4,9V-3V du matériau dopé au titane et la courbe b) correspondant au test 4,9V-3V du matériau non dopé au titane.

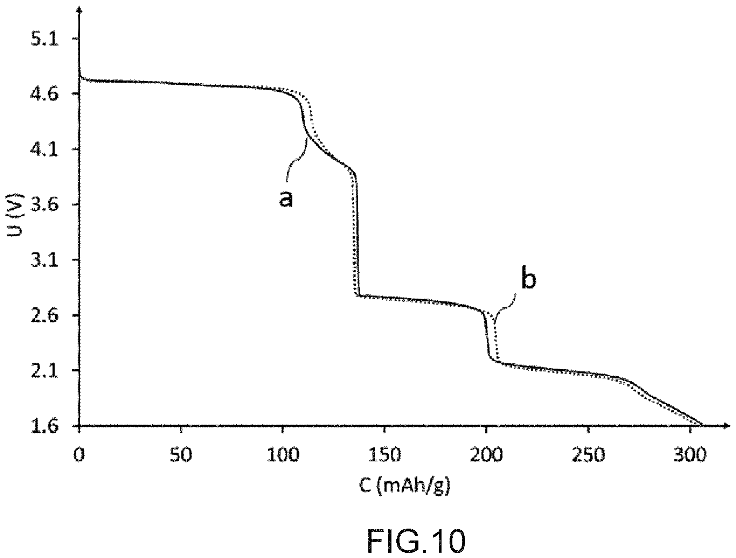

D'autres piles boutons ont été réalisées de la même manière que les précédentes et cyclées à C/10 sur une gamme de 5,1V-1,6V pour évaluer l'effet du dopage du titane sur le comportement du manganèse. Les résultats sont présentés en figure 10 qui illustre la décharge du matériau en fonction du potentiel de mesure (courbe a) pour le matériau dopé et courbe b) pour le matériau non dopé).

Les performances atteintes par le matériau sont excellentes.

### EXEMPLE 5

Le présent exemple a trait à la préparation d'une spinelle de formule LiNi_{0,5}Mn_{1,46}Ti_{0,04}O₄.

Dans un premier temps, il est préparé une solution par dissolution de sulfate de nickel (53,1 g), de sulfate de manganèse (99,7 g) dans de l'eau (392,3 g). A cette solution est ajoutée une solution de bis(lactalo)dihydroxyde titanate de diammonium (9,4 g à 50% massique) de formule suivante : 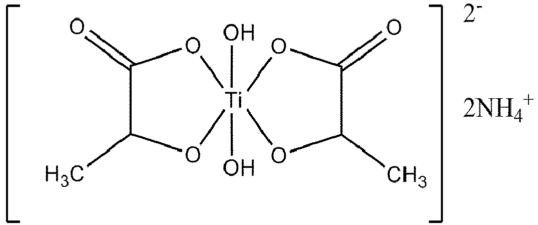 moyennant quoi la solution résultante est une solution équimolaire à 2 M (présentant un volume d'environ 400 mL). Une solution composée de 134,2 g de carbonate de sodium et d'ammoniaque (31,5 g d'ammoniaque à 28% massique) diluée dans de l'eau (565 g) est préparée séparément.

Les deux solutions ont des circuits d'injection séparés permettant de pomper les solutions dans un réacteur de coprécipitation de 5L, dans lequel 1L d'eau a été introduit au préalable. La température est portée à 50°C et le contenu du réacteur est maintenu sous une agitation de 1000 tours/minute. Un circuit annexe de gaz inerte (argon ou azote) permet de désoxygéner la solution tout en maintenant le réacteur sous atmosphère inerte. La solution contenant les éléments métalliques est pompée dans le réacteur à hauteur de 360 mL.

Durant toute l'opération, la solution composée de carbonate de sodium et d'ammoniaque est injectée en parallèle afin de maintenir un pH constant à 7,5. Une fois la solution métallique introduite, la solution est maintenue sous agitation pendant 1 nuit. La solution est ensuite filtrée et le précipité lavé à l'eau chaude afin d'éliminer les ions sulfates et sodium potentiellement adsorbés à la surface du matériau. Le précipité de carbonate de formule Ni_{0,25}Mn_{0,73}Ti_{0,02}CO₃ est ensuite séché sous vide à 80°C pendant une nuit.

Dans un second temps, le carbonate de formule Ni_{0,25}Mn_{0,73}Ti_{0,02}CO₃ est ensuite mélangé à du carbonate de lithium (3% d'excès molaire par rapport à la stoechiométrie) puis est calciné sous air à 950°C pendant 6 heures pour former le composé de formule LiNi_{0,5}Mn_{1,46}Ti_{0,04}O₄.

Le matériau est ensuite caractérisé par diffraction des rayons X. Le diffractogramme obtenu est caractéristique d'un matériau de type spinelle présentant le groupe d'espace Fd-3m.

Le matériau a ensuite été caractérisé en électrochimie en pile bouton. Pour ce faire, la poudre synthétisée est mélangée à une source de carbone (SuperP^{®}), du PVDF 8130 dans de la N-méthyl-2-pyrrolidone (NMP). La composition du mélange en masse représente le ratio suivant 90/5/5 (matériau/PVDF/Carbone). Le mélange ainsi formé est enduit sur une feuille d'aluminium puis laissé sécher pendant 24 heures à 60°C pour évaporer la NMP. A partir de cette feuille ainsi enduite, un disque de 14mm est alors découpé puis séché sous vide pendant 48 heures à 80°C. L'électrode ainsi formée est ensuite rentrée en boite à gant et une pile bouton est alors assemblée en utilisant du lithium métal comme anode, du Celgard 2400 ^{®} comme séparateur et un électrolyte (LiPF6 1M dans un mélange de solvants carbonates EC/PC/DMC, EC correspondant au carbonate d'éthylène, PC au carbonate de propylène et DMC correspondant au carbonate de diméthyle).

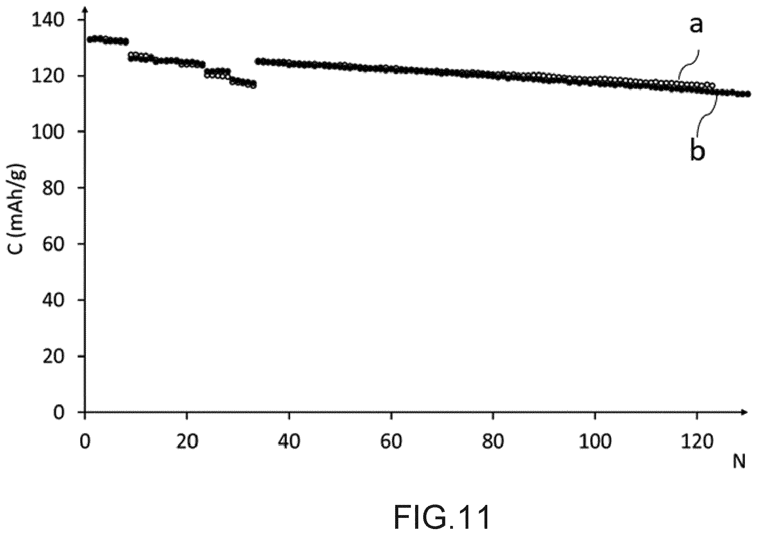

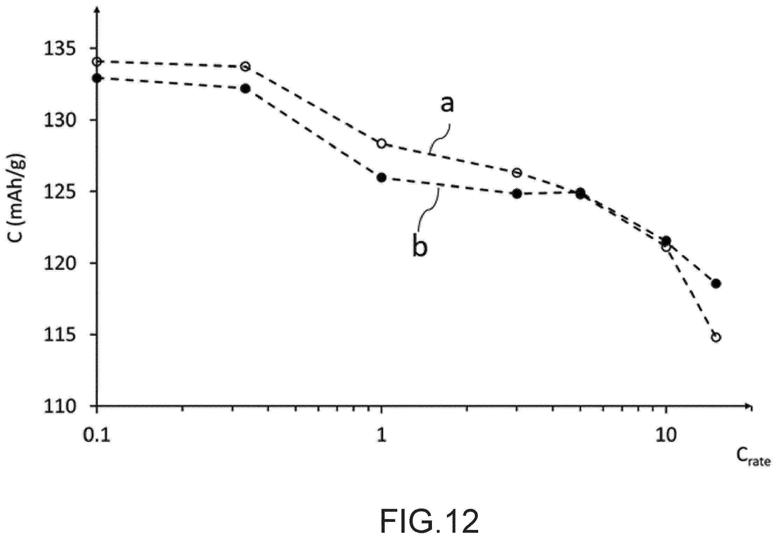

En parallèle, une pile bouton a été réalisée de la même manière que ci-dessus, si ce n'est que le matériau actif d'électrode positive n'est pas dopé au titane, ce matériau ayant pour formule LiNi_{0,5}Mn_{1,5}O₄. Une comparaison des performances entre la pile bouton comprenant le matériau dopé au titane et la pile bouton comprenant le matériau non dopé au titane est présenté à la figure 11 jointe en annexe, qui est un graphique illustrant l'évolution de la capacité C (en mAh/g) en fonction du nombre de cycles N, la courbe a) correspondant à celle obtenue avec la pile bouton comprenant le matériau dopé au titane et la courbe b) correspondant à celle obtenue avec la pile bouton comprenant le matériau non-dopé au titane. Une signature en puissance du matériau est premièrement réalisée de C/10 à 15C sur les 35 premiers cycles (3 cycles à C/10, 5 cycles à C/3, 5 cycles à C, 5 cycles à 3C, 5 cycles à 5C, 5 cycles à 10C, 5 cycles à 15C entre 4,9 V et 3 V suivi d'un cyclage à 1C sur une centaine de cycles. Il apparait que le matériau possédant 2,7% de titane est plus stable que le matériau non dopé. Cette signature en puissance montre les performances du matériau en fonction du régime de charge/décharge appliqué. Le comportement en puissance est plus clairement représenté sur la figure 12 jointe en annexe, qui illustre l'évolution de la capacité C (en mAh/g) en fonction du régime de charge/décharge appliqué (indiqué par l'ordonné Cᵣₐₜₑ), la courbe a) correspondant au test 4,9V-3V du matériau dopé au titane et la courbe b) correspondant au test 4,9V-3V du matériau non-dopé au titane.

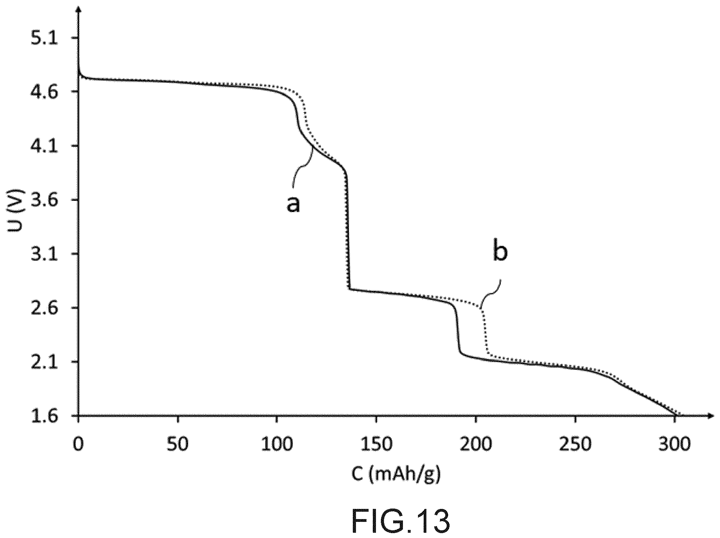

D'autres piles boutons ont été réalisées de la même manière que les précédentes et cyclées à C/10 sur une gamme de 5,1V-1,6V pour évaluer l'effet du dopage du titane sur le comportement du manganèse. Les résultats sont présentés en figure 13 de l'annexe qui illustre la décharge du matériau en fonction du potentiel de mesure.

Les performances atteintes par le matériau sont excellentes.

### EXEMPLE 6

Le présent exemple a trait à la préparation d'une spinelle de formule LiNi_{0,5}Mn_{1,1}Ti_{0,4}O₄.

Dans un premier temps, il est préparé une solution par dissolution de sulfate de nickel (53,1 g), de sulfate de manganèse (75,1 g) dans de l'eau (323,0 g). A cette solution est ajoutée une solution de bis(lactalo)dihydroxyde titanate de diammonium (94,1 g à 50% massique) de formule suivante : 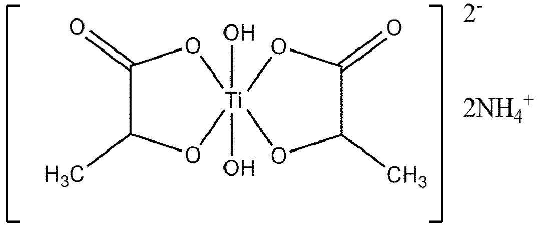 moyennant quoi la solution résultante est une solution équimolaire à 2 M (présentant un volume d'environ 400 mL). Une solution composée de 134,2 g de carbonate de sodium et d'ammoniaque (31,5 g d'ammoniaque à 28% massique) diluée dans de l'eau (565 g) est préparée séparément.

Les deux solutions ont des circuits d'injection séparés permettant de pomper les solutions dans un réacteur de coprécipitation de 5L, dans lequel 1L d'eau a été introduit au préalable. La température est portée à 50°C et le contenu du réacteur est maintenu sous une agitation de 1000 tours/minute. Un circuit annexe de gaz inerte (argon ou azote) permet de désoxygéner la solution tout en maintenant le réacteur sous atmosphère inerte. La solution contenant les éléments métalliques est pompée dans le réacteur à hauteur de 360 mL.

Durant toute l'opération, la solution composée de carbonate de sodium et d'ammoniaque est injectée en parallèle afin de maintenir un pH constant à 7,5. Une fois la solution métallique introduite, la solution est maintenue sous agitation pendant 1 nuit. La solution est ensuite filtrée et le précipité lavé à l'eau chaude afin d'éliminer les ions sulfates et sodium potentiellement adsorbés à la surface du matériau. Le précipité de carbonate de formule Ni_{0,25}Mn_{0,55}Ti_{0,2}CO₃ est ensuite séché sous vide à 80°C pendant une nuit.

Dans un second temps, le carbonate de formule Ni_{0,25}Mn_{0,55}Ti_{0,2}CO₃ est ensuite mélangé à du carbonate de lithium (3% d'excès molaire par rapport à la stoechiométrie) puis est calciné sous air à 950°C pendant 6 heures pour former le composé de formule LiNi_{0,5}Mn_{1,1}Ti_{0,4}O₄.

Le matériau est ensuite caractérisé par diffraction des rayons X. Le diffractogramme obtenu est caractéristique d'un matériau de type spinelle présentant le groupe d'espace Fd-3m.

Le matériau a ensuite été caractérisé en électrochimie en pile bouton. Pour ce faire, la poudre synthétisée est mélangée à une source de carbone (SuperP^{®}), du PVDF 8130 dans de la N-méthyl-2-pyrrolidone (NMP). La composition du mélange en masse représente le ratio suivant 90/5/5 (matériau/PVDF/Carbone). Le mélange ainsi formé est enduit sur une feuille d'aluminium puis laissé sécher pendant 24 heures à 60°C pour évaporer la NMP. A partir de cette feuille ainsi enduite, un disque de 14mm est alors découpé puis séché sous vide pendant 48 heures à 80°C. L'électrode ainsi formée est ensuite rentrée en boite à gant et une pile bouton est alors assemblée en utilisant du lithium métal comme anode, du Celgard 2400 ^{®} comme séparateur et un électrolyte (LiPF6 1M dans un mélange de solvants carbonates EC/PC/DMC, EC correspondant au carbonate d'éthylène, PC au carbonate de propylène et DMC correspondant au carbonate de diméthyle).

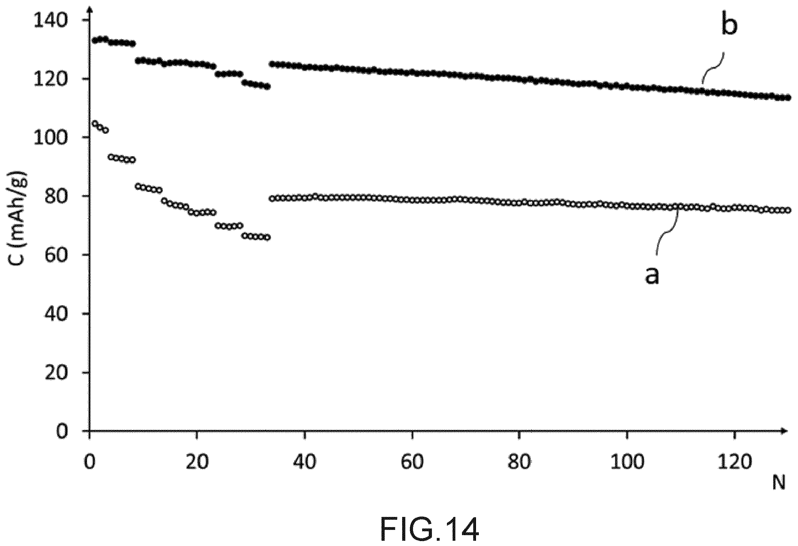

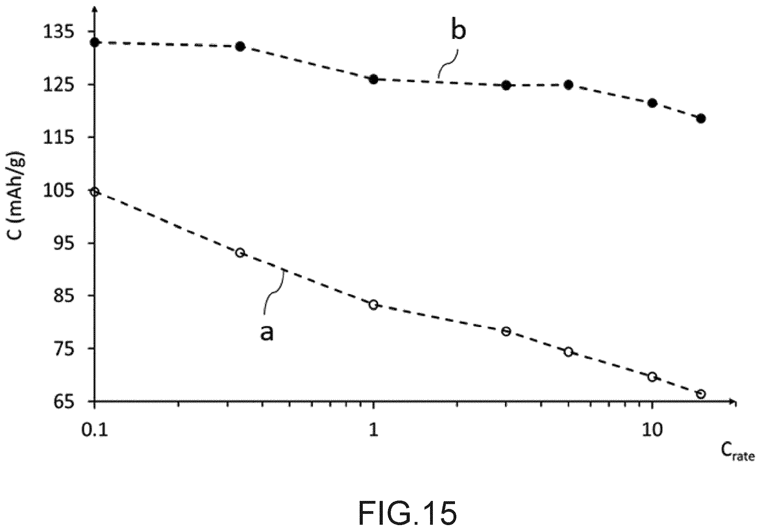

En parallèle, une pile bouton a été réalisée de la même manière que ci-dessus, si ce n'est que le matériau actif d'électrode positive sans présence de titane, ce matériau ayant pour formule LiNi_{0,5}Mn_{1,5}O₄. Une comparaison des performances entre la pile bouton comprenant le matériau substitué par du titane et la pile bouton comprenant le matériau sans présence de titane est présenté à la figure 14 jointe en annexe, qui est un graphique illustrant l'évolution de la capacité C (en mAh/g) en fonction du nombre de cycles N, la courbe a) correspondant à celle obtenue avec la pile bouton comprenant le matériau substitué par du titane et la courbe b) correspondant à celle obtenue avec la pile bouton comprenant le matériau sans présence de titane. Une signature en puissance du matériau est premièrement réalisée de C/10 à 15C sur les 35 premiers cycles (3 cycles à C/10, 5 cycles à C/3, 5 cycles à C, 5 cycles à 3C, 5 cycles à 5C, 5 cycles à 10C, 5 cycles à 15C entre 4,9 V et 3 V suivi d'un cyclage à 1C sur une centaine de cycles. Il apparait que le matériau possédant 36% de titane est plus stable que le matériau sans titane. Cette signature en puissance montre les performances du matériau en fonction du régime de charge/décharge appliqué. Le comportement en puissance est plus clairement représenté sur la figure 15 jointe en annexe, qui illustre l'évolution de la capacité C (en mAh/g) en fonction du régime de charge/décharge appliqué (indiqué par l'ordonné Cᵣₐₜₑ), la courbe a) correspondant au test 4,9V-3V du matériau substitué par du titane et la courbe b) correspondant au test 4,9V-3V du matériau sans présence de titane.

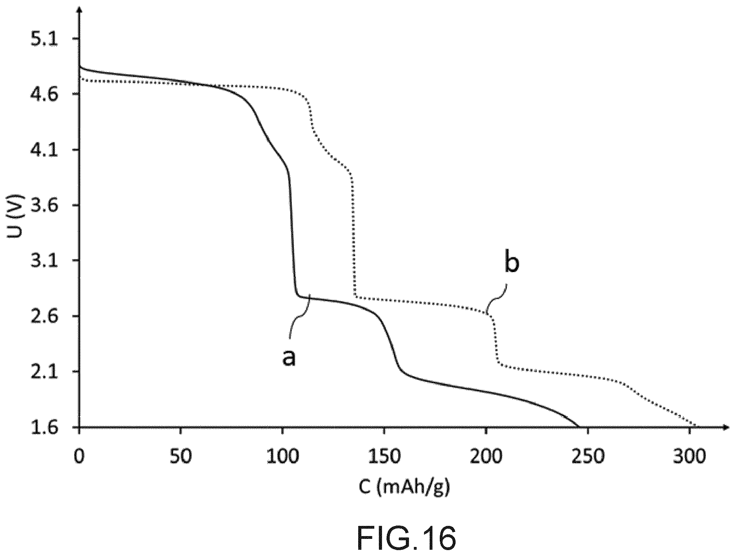

D'autres piles boutons ont été réalisées de la même manière que les précédentes et cyclées à C/10 sur une gamme de 5,1V-1,6V pour évaluer l'effet de la substitution du manganèse par le titane sur le comportement du matériau. Les résultats sont présentés en figure 16 de l'annexe qui illustre la décharge du matériau en fonction du potentiel de mesure.

Les performances atteintes par le matériau sont plus faibles que celles du matériau non substitué mais dans les mêmes ordres de grandeur que de matériaux décrits dans des journaux scientifiques, comme dans P. Strobel et al, « Effect of tetravalent cation on 5V redox mechanism in LiNi0.5M1.5O4 spinels », Meet. Abstr. MA2010-03 572, 2010.et M. Lin et al, « A strategy to improve cyclic performance of LiNi0.5Mn1.504 in a wide voltage region by Ti-doping », Journal of the Electrochemical Society, 160 (5) A3036-A3040 (2013).

## Revendications

1. Procédé de préparation d'un matériau actif d'électrode positive pour batterie au lithium consistant en un oxyde lithié comprenant du titane et éventuellement un ou plusieurs autres éléments métalliques comprenant les étapes successives suivantes :
a) une étape de formation d'un précipité comprenant du titane et le ou les éventuels autres éléments métalliques par mise en contact d'un complexe de coordination du titane et, le cas échéant, d'au moins un sel du ou des autres éléments métalliques avec un milieu aqueux basique ;
b) une étape de récupération du précipité ainsi formé ;
c) une étape de calcination du précipité en présence d'une source de lithium.

2. Procédé de préparation selon la revendication 1, dans lequel le ou les éventuels autres éléments métalliques sont choisis parmi les éléments métalliques de transition, les éléments métalliques de post-transition et les mélanges de ceux-ci.

3. Procédé de préparation selon la revendication 1 ou 2, dans lequel le ou les éventuels autres éléments métalliques sont choisis parmi le manganèse, le cobalt, le nickel et les mélanges de ceux-ci.

4. Procédé de préparation selon la revendication 1 ou 2, dans lequel l'oxyde lithié comprenant du titane est choisi parmi :
- les oxydes lamellaires de formule LiTiMO₂, dans laquelle M désigne Co, Ni, Mn, Al, Cu, Fe et des mélanges de ceux-ci ;
- les oxydes de type spinelle de formule LiTiMO₄, dans laquelle M désigne Ni, Mn, Co, Cu, Al, Fe et des mélanges de ceux-ci.

5. Procédé selon l'une quelconque des revendications précédentes, dans lequel le complexe de coordination du titane comprend au moins un ligand comprenant au moins deux groupes établissant des liaisons de coordination avec le titane.

6. Procédé selon l'une quelconque des revendications précédentes, dans lequel le complexe de coordination du titane comprend au moins un ligand bidenté comprenant un groupe carboxylate et un groupe alcoolate.

7. Procédé selon la revendication 5 ou 6, dans lequel le complexe de coordination du titane comprend, en outre, au moins un ligand comprenant un seul groupe établissant une liaison de coordination avec le titane.

8. Procédé selon la revendication 7, dans lequel le ligand comprenant un seul groupe établissant une liaison de coordination avec le titane est un ligand comprenant, comme seul groupe établissant une liaison de coordination avec le titane, un groupe -OH.

9. Procédé selon l'une quelconque des revendications précédentes, dans lequel le complexe de coordination comprend un ou plusieurs cations pour neutraliser, le cas échéant, l'édifice constitué par le titane et ses ligands.

10. Procédé selon l'une quelconque des revendications précédentes, dans lequel le complexe de coordination est un complexe répondant à la formule (I) suivante :

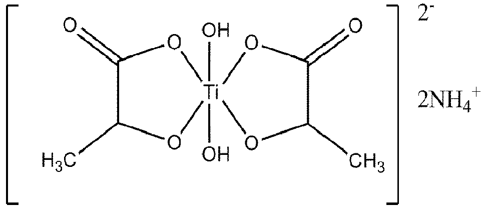

11. Procédé selon l'une quelconque des revendications précédentes, dans lequel le ou les sels du ou des autres éléments métalliques sont des nitrates, des carbonates, des chlorures, ou des sulfates du ou des autres éléments métalliques.

12. Procédé selon l'une quelconque des revendications précédentes, dans lequel l'étape de formation du précipité est réalisée sous gaz inerte.

13. Procédé selon l'une quelconque des revendications précédentes, dans lequel la source de lithium est du carbonate de lithium, de l'hydroxyde de lithium ou de l'acétate de lithium.

14. Procédé selon l'une quelconque des revendications précédentes, dans lequel l'étape de calcination est réalisée à une température allant de 700°C à 1000°C pendant une durée allant de 4 heures à 24 heures.
